# EUROPEAN PATENT APPLICATION

(11) **EP 4 752 963 A1**
(43) Date of publication of application: **03.06.2026**
(21) Application number: 24913646.6
(22) Date of filing: 27.12.2024
(51) Int. Cl.: H01M 4/136, H01M 4/62, H01M 10/0562, H01M 10/052, H01M 4/02

(54) **CATHODE MIX FOR ALL-SOLID-STATE BATTERY**

(30) Priority: 27.12.2023 JP 2023221545
(71) Applicant: LG Energy Solution, Ltd., Seoul 07335 (KR)
(72) Inventor: KIM, Hackho, Yokohama-shi, Kanagawa 220--0011 (JP)
(74) Representative: Goddar, Heinz J.
(86) International application number: PCT/KR2024/021227
(87) International publication number: WO 2025/143841

(57) **Abstract**

The present disclosure is directed to providing a positive electrode mixture which can improve the discharge capacity of a battery. The positive electrode mixture for an all-solid-state battery includes: a sulfur-containing positive electrode active material, a first sulfur-containing compound containing cobalt, a second sulfur-containing compound containing phosphorus, and a conductivity aid.

## Description

### TECHNICAL FIELD

The present disclosure relates to a positive electrode mixture for an all-solid-state battery.

This application is based on and claims priority from Japanese Patent Application No. 2023-221545, filed on December 27, 2023, the disclosure of which is incorporated herein in its entirety by reference.

### BACKGROUND ART

Recently, with the electrification of transportation means such as electric vehicles, development of batteries used as power sources thereof has been given many attentions, and development of batteries realizing high output and high capacity has been conducted.

As next-generation batteries capable of improving safety, all-solid-state batteries have been spotlighted. Among them, development of all-solid-state lithium-sulfur batteries using sulfur having a significantly high theoretical capacity of 1675 mAh/g as a positive electrode active material has been conducted. In addition, in the field of sulfur batteries, attempts have been made to increase the charge/discharge capacity of a sulfur battery by improving the availability of sulfur.

### DISCLOSURE

### Technical Problem

There has been a need for providing batteries with high capacity. The present disclosure is designed to solve the problems of the related art, and therefore the present disclosure is directed to providing a positive electrode mixture which can improve the discharge capacity of a battery.

### Technical Solution

In one aspect of the present disclosure, there is provided a positive electrode mixture for an all-solid-state battery, including:
a sulfur-containing positive electrode active material,
a first sulfur-containing compound containing cobalt,
a second sulfur-containing compound containing phosphorus, and
a conductivity aid.

In an exemplary embodiment of the present disclosure, the weight ratio of the first sulfur-containing compound based on the combined weight of the positive electrode active material, the first sulfur-containing compound, the second sulfur-containing compound and the conductivity aid may be more than 0 and equal to or less than 0.25.

In an exemplary embodiment of the present disclosure, the molar ratio (Co/P) of cobalt contained in the first sulfur-containing compound based on phosphorus contained in the second sulfur-containing compound may be more than 0 and equal to or less than 3.

In an exemplary embodiment of the present disclosure, the positive electrode active material may include at least one selected from the group consisting of single substance sulfur and Li₂S.

In an exemplary embodiment of the present disclosure, the first sulfur-containing compound may include at least one selected from the group consisting of CoS, CoS₂, Co₃S₄ and Co₉S₈.

In an exemplary embodiment of the present disclosure, the second sulfur-containing compound may include at least one selected from the group consisting of P₂S₅, P₂S₄, P₄S₇, P₄S₅ and P₄S₃.

In an exemplary embodiment of the present disclosure, the positive electrode mixture may include no Li element.

### Advantageous Effects

The present disclosure can provide a positive electrode mixture which can improve the discharge capacity of a battery.

### DESCRIPTION OF DRAWINGS

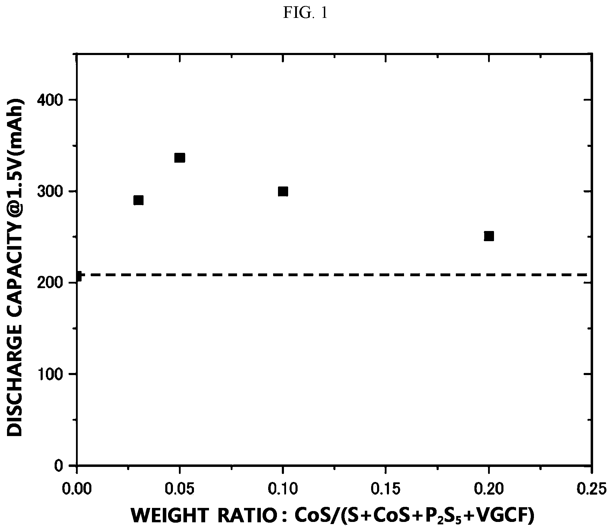

FIG. 1 is a graph illustrating a relationship between a weight ratio (CoS/(S+CoS+P₂S₅+VGCF)) of the first sulfur-containing compound containing cobalt based on a positive electrode mixture and a discharge capacity of an all-solid-state battery with a cutoff voltage set at 1.5 V.

### BEST MODE

In one aspect of the present disclosure, there is provided a positive electrode mixture for an all-solid-state battery, including a sulfur-containing positive electrode active material, a first sulfur-containing compound containing cobalt, a second sulfur-containing compound containing phosphorus, and a conductivity aid.

Among sulfur batteries, lithium-sulfur batteries generally assume an upper cutoff voltage of 3.1 V- lower cutoff voltage of 1.5 V as normal use voltages. However, it is likely that the battery voltage reaches 1.5 V or less due to a deviation in voltage during the charge/discharge of the battery, or the like, and thus there is a need for a positive electrode mixture which is not deteriorated even at 1.5 V or less and provides high capacity.

As a positive electrode mixture for an all-solid-state battery, a positive electrode mixture including a sulfur-containing positive electrode active material substituting for expensive lithium sulfide (Li₂S), a second sulfur-containing compound having P and S elements and a conductivity aid is problematic in that it shows low electron conductivity and low close adhesive property among the constitutional elements themselves in the positive electrode mixture, resulting in a decrease in discharge capacity after each charge/discharge cycle (an increase in irreversible capacity). It is thought that this is because side reactions occur at a battery voltage of 1.5 V or less to cause reduction of the second sulfur-containing compound, resulting in degradation of close adhesive property among the constitutional elements themselves in the positive electrode mixture.

In addition, as a positive electrode mixture for an all-solid-state battery, a positive electrode mixture including a sulfur-containing positive electrode active material, a first sulfur-containing compound having Co and S elements and a conductivity aid shows good cycle characteristics even when the lower cutoff voltage is set at 1 V, but has a problem of low battery capacity. It is thought that this is because composite formation through the reaction of the sulfur-containing positive electrode active material with the sulfur-containing compound is required for providing a battery with high capacity, but the content of the first sulfur-containing compound containing cobalt required for such composite formation is larger than the content of the second sulfur-containing compound containing phosphorus.

The inventors of the present disclosure have found that a positive electrode mixture including a first sulfur-containing compound containing cobalt and a second sulfur-containing compound containing phosphorus is used in the battery, so that the electron conductivity of the positive electrode mixture and close adhesive property among the constitutional elements themselves in the positive electrode mixture may be improved, thereby improving the discharge capacity (particularly, discharge capacity when the lower cutoff voltage is set at 1.5 V).

### 1. Positive electrode material

The positive electrode active material has an S element. Various materials may be used as sulfur-containing positive electrode materials. For example, the positive electrode active material may contain at least one selected from the group consisting of single substance sulfur and Li₂S. For example, single substance sulfur may include S₈ sulfur. Although S₈ sulfur may have three crystal types of α sulfur (orthorhombic sulfur), β sulfur (monoclinic sulfur) and γ sulfur (monoclinic sulfur), any crystal type may be used.

The content of the positive electrode active material contained in the positive electrode mixture is not particularly limited, and may be determined suitably depending on desired battery performance. For example, the positive electrode mixture may include the positive electrode active material at 10-80 wt%. The lower limit may be 15 wt% or more, 20 wt% or more, or 25 wt% or more. The upper limit may be 70 wt% or less, or 60 wt% or less. When the content of the positive electrode active material is excessively high, there are cases where the ion conductivity and electron conductivity at the positive electrode side of a battery are insufficient.

The positive electrode active material may be partially or totally present in the form of a solid solution in the sulfur-containing compound as described hereinafter. In other words, the positive electrode mixture may include a solid solution of the positive electrode active material with the sulfur-containing compound. In addition, an S element in the positive electrode active material and an S element in the sulfur-containing compound may have a chemical bond (S-S bond).

### 2. Sulfur-containing compound

The positive electrode mixture according to an embodiment of the present disclosure includes, as sulfur-containing compounds, at least a first sulfur-containing compound containing cobalt, and a second sulfur-containing compound containing phosphorus. The first sulfur-containing compound containing cobalt may be a semiconductor and may have higher electron conductivity as compared to single substance sulfur of an insulator used as a positive electrode active material. In addition, the first sulfur-containing compound containing cobalt has mechanical flexibility, and thus can improve close adhesive property among the constitutional elements themselves in the positive electrode mixture. The second sulfur-containing compound containing phosphorus may form a compound with lithium upon the initial charge of an all-solid-state battery and may have ion conductivity.

In the positive electrode mixture according to an embodiment of the present disclosure, the weight ratio (for example, CoS/(S+CoS+P₂S₅+VGCF)) of the first sulfur-containing compound based on the combined weight of the positive electrode active material, the first sulfur-containing compound, the second sulfur-containing compound and the conductivity aid may be more than 0 and equal to or less than 0.25. Preferably, the weight ratio may be more than 0 and equal to or less than 0.15. More preferably, the weight ratio may be 0.01-0.1. Even more preferably, the weight ratio may be 0.03-0.075. When the weight ratio falls within the above-defined range, electron conductivity of the positive electrode mixture and close adhesive property among the constitutional elements themselves in the positive electrode mixture may be improved, so that discharge capacity of the battery may be improved.

In the positive electrode mixture according to an embodiment of the present disclosure, the molar ratio (Co/P) of cobalt contained in the first sulfur-containing compound based on phosphorus contained in the second sulfur-containing compound may be more than 0 and equal to or less than 3. Preferably, the molar ratio may be more than 0 and equal to or less than 2. More preferably, the molar ratio may be more than 0 and equal to or less than 1. Even more preferably, the molar ratio may be more than 0 and equal to or less than 0.5. Most preferably, the molar ratio may be 0.1-0.35. When the molar ratio falls within the above-defined range, the balance between the ion conductivity and electron conductivity of the positive electrode mixture may be improved, so that the discharge capacity of the battery may be improved.

During the discharge of a battery, carrier ions are conducted from a negative electrode layer to a positive electrode layer through a solid electrolyte layer, and the carrier ions arriving at the positive electrode layer may react with the positive electrode active material to produce discharge products (e.g. Li₂S) having low ion conductivity. For this reason, when the second sulfur-containing compound having P and S elements does not exist in the positive electrode layer, ion conduction paths are insufficient in the positive electrode layer due to the discharge products having low ion conductivity, thereby making it difficult to perform discharge reactions. On the other hand, when the second sulfur-containing compound containing phosphorus exists in the positive electrode layer, ion conduction paths are ensured by the second sulfur-containing compound containing phosphorus even though the discharge products have low ion conductivity, thereby facilitating progress of discharge reactions. In addition, the first sulfur-containing compound having Co and S elements realizes high electron conductivity in the positive electrode mixture and close adhesive property among the constitutional elements themselves in the positive electrode mixture, which can inhibit deterioration of the positive electrode mixture caused by side reactions and separation of the constitutional elements. Therefore, by using the positive electrode mixture including the first sulfur-containing compound containing cobalt and the second sulfur-containing compound containing phosphorus in the battery, it is possible to improve the electron conductivity of the positive electrode mixture and close adhesive property among the constitutional elements themselves in the positive electrode mixture, during the charge/discharge reactions of a secondary battery, and thus it is possible to improve the discharge capacity (particularly, discharge capacity with a lower cutoff voltage set at 1.5 V) of the battery.

The positive electrode mixture may include the first sulfur-containing compound containing cobalt and the second sulfur-containing compound containing phosphorus, and may further include a third sulfur-containing compound having another element (e.g. Ge, Sn, Si or Al) and an S element. In the latter case, the positive electrode mixture may include the first sulfur-containing compound containing cobalt and the second sulfur-containing compound containing phosphorus, as main ingredients of the sulfur-containing compounds. Particularly, when the total content of the sulfur-containing compounds contained in the positive electrode mixture is taken as 100 wt%, the combined weight of the first sulfur-containing compound containing cobalt and the second sulfur-containing compound containing phosphorus may be 50-100 wt%.

The positive electrode mixture may include sulfide as a sulfur-containing compound. That is, the first sulfur-containing compound may include a sulfide of Co element. The first sulfur-containing compound may include at least one selected from the group consisting of CoS, CoS₂, Co₃S₄ and Co₉S₈. Preferably, the first sulfur-containing compound may be CoS. Meanwhile, the second sulfur-containing compound containing phosphorus may include a sulfide of P element. The second sulfur-containing compound may include at least one selected from the group consisting of P₂S₅, P₂S₄, P₄S₇, P₄S₅ and P₄S₃. Preferably, the second sulfur-containing compound may be P₂S₅.

In addition, the sulfur-containing compound may include sulfide (MₓS_{y}) of an M element. Herein, each of x and y is an integer imparting electrical neutrality with S depending on type of M. Particular examples of the sulfide (MₓS_{y}) may include GeS₂, SnS₂, SiS₂ and Al₂S₃. In addition, for example, such a sulfide may be residue of a starting material.

As long as the positive electrode mixture according to an embodiment of the present disclosure includes, as sulfur-containing compounds, the first sulfur-containing compound containing cobalt and the second sulfur-containing compounds containing phosphorus, the content of each sulfur-containing compound contained in the positive electrode mixture is not particularly limited, and may be determined suitably depending on desired battery performance. For example, the positive electrode mixture may include the sulfur-containing compounds at 10-80 wt%. The lower limit may be 15 wt% or more, 20 wt% or more, or 25 wt% or more. The upper limit may be 70 wt% or less, or 60 wt% or less. If the content of the sulfur-containing compounds is excessively high, the content of the positive electrode active material decreases relatively, and thus there are cases where a positive electrode mixture having sufficient capacity cannot be obtained.

### 3. Conductivity aid

A conductivity aid functions to improve the electron conductivity of the positive electrode mixture. In addition, for example, it is assumed that the conductivity aid functions as a reductant by which single substance sulfur (positive electrode active material) is reduced when carrying out mechanical milling of a starting material mixture. The conductivity aid may be dispersed in the positive electrode mixture.

Particular examples of the conductivity aid may include carbonaceous materials and metallic materials. For example, the carbonaceous materials may include vapor grown carbon fibers (VGCFs), acetylene black, activated carbon, furnace black, carbon nanotubes, ketjen black, graphene, or the like. Two or more conductivity aids may be used in combination in the positive electrode mixture.

The content of the conductivity aid contained in the positive electrode mixture is not particularly limited and may be determined suitably depending on desired battery performance. For example, the positive electrode mixture may include the conductivity aid at 5-50 wt%. The lower limit may be 10 wt% or more. The upper limit may be 40 wt% or less. If the content of the conductivity aid is excessively high, the content of the positive electrode active material decreases relatively, and thus there are cases where a positive electrode mixture having sufficient capacity cannot be obtained.

### 4. Elements substantially not contained in positive electrode mixture

### 4-1. Li element

According to the related art, a positive electrode mixture containing an ion conductor (solid electrolyte) having an Li element is known. For example, an ion conductor using Li₂S as a starting material is known. However, since Li₂S has low water resistance, a battery using such a positive electrode mixture tends to have low capacity. On the contrary, since the positive electrode mixture according to an embodiment of the present disclosure substantially contains no Li element, it is possible to inhibit the above-mentioned degradation of capacity.

The expression 'substantially contains no Li element' means that the ratio of Li elements based on the whole elements contained in the positive electrode mixture is 20 mol% or less. The ratio of Li elements may be 16 mol% or less, 8 mol% or less, 4 mol% or less, 1 mol% or less, or 0 mol% (detection limit or less).

Meanwhile, as used herein, 'positive electrode mixture' means a material in a state before carrying out initial Li intercalation (initial discharge) after it is introduced to an all-solid-state battery. Therefore, the positive electrode layer of the all-solid-state battery after initial discharge may substantially contain Li elements.

### 5. Positive electrode mixture

The positive electrode mixture according to an embodiment of the present disclosure may include a positive electrode active material, sulfur-containing compounds including a first sulfur-containing compound containing cobalt and a second sulfur-containing compound containing phosphorus, and a conductivity aid, or may further include other components, such as a binder.

Particular examples of the binder may include acrylonitrile butadiene rubber (ABR), butadiene rubber (BR), polyvinylidene fluoride (PVDF), styrene butadiene rubber (SBR), or the like. The content of the binder in the positive electrode mixture is not particularly limited.

The positive electrode mixture may have a powder-like shape, a lump-like shape formed by aggregation and binding of a plurality of particles, or any shape other than the above-mentioned shapes. Various shapes may be used depending on desired battery shapes, etc.

### 6. Method for preparing positive electrode mixture

The method for preparing a positive electrode mixture according to an embodiment of the present disclosure includes at least the steps of: (1) a preparation step of preparing starting materials, including a sulfur-containing positive electrode active material, sulfur-containing compounds including a first sulfur-containing compound containing cobalt and a second sulfur-containing compound containing phosphorus, and a conductivity aid; and (2) a mixing step of mixing the starting materials to obtain a positive electrode mixture.

### (1) Preparation step

The preparation step is a step of preparing starting materials, including a sulfur-containing positive electrode active material, sulfur-containing compounds including a first sulfur-containing compound containing cobalt and a second sulfur-containing compound containing phosphorus, and a conductivity aid. The starting materials may be prepared in situ, or purchased as commercially available products.

The starting materials may merely include the positive electrode active material, sulfur-containing compounds and the conductivity aid, or may further include the other materials. In addition, the starting materials may not substantially contain Li elements.

As described above, the positive electrode active material may be single substance sulfur. Single substance sulfur preferably has high purity.

The first sulfur-containing compound containing cobalt may be exemplified by CoS. The second sulfur-containing compound containing phosphorus may be exemplified by P₂S₅. The starting materials may merely include, as sulfur-containing compounds, the first sulfur-containing compound and the second sulfur-containing compound, or may further include a sulfur-containing compound of another element. Such a sulfur-containing compound of another element may be exemplified by GeS₂, SnS₂, SiS₂, Al₂S₃, etc.

The conductivity aid is the same as described above, and detailed description thereof will be omitted herein.

The content of each of the positive electrode active material, sulfur-containing compounds and the conductivity aid may be the same as the content of each of the positive electrode active material, sulfur-containing compounds and the conductivity aid, described hereinabove with reference to the positive electrode mixture.

### (2) Mixing step

The mixing step is a step of mixing the starting materials to obtain a positive electrode mixture. The means for mixing the starting materials is not particularly limited. For example, the starting materials may be mixed through mechanical milling. The starting materials may become amorphous more easily through mechanical milling.

Although the mechanical milling is not particularly limited as long as it is a method for mixing the positive electrode mixture while imparting mechanical energy thereto, particular examples thereof may include ball mill, vibration mill, turbo mill, mechanofusion, disc mill, or the like. In terms of facilitating conversion of the starting materials into an amorphous state, a planetary ball mill may be used.

The mechanical milling may be dry mechanical milling or wet mechanical milling. The liquid used for wet mechanical milling may be exemplified by a liquid having such an aprotic degree that no hydrogen sulfide is generated. Particular examples of the liquid may include aprotic liquids, such as a polar aprotic liquid, non-polar aprotic liquid, etc.

The mechanical milling condition may be set suitably so that a desired positive electrode mixture may be obtained. For example, when using a planetary ball mill, the starting material mixture and balls for pulverization are introduced to a container, and milling treatment is carried out at a predetermined holder rotation number for a predetermined time. For example, the holder rotation number may be 200 rpm or more, 300 rpm or more, or 500 rpm or more. Meanwhile, the holder rotation number may be 800 rpm or less, or 600 rpm or less, for example. In addition, for example, the treatment time of the planetary ball mill may be 30 minutes or more, or 5 hours or more. Meanwhile, the treatment time of the planetary ball mill may be, for example, 100 hours or less, or 60 hours or less. For example, the material of the container and balls for pulverization used for the planetary ball mill may include ZrO₂, Al₂O₃, etc. For example, the balls for pulverization may have a diameter of 1-20 mm. The mechanical milling is carried out preferably under inert gas atmosphere (e.g. Ar gas atmosphere).

### 7. All-solid-state battery

An all-solid-state battery includes a positive electrode including a positive electrode layer and a positive electrode current collector, a negative electrode including a negative electrode layer and a negative electrode current collector, and a solid electrolyte layer disposed between the positive electrode layer and the negative electrode layer.

The positive electrode layer includes a positive electrode mixture. The positive electrode layer may include the solid electrolyte mentioned hereinafter.

If necessary, the positive electrode layer may include a solid electrolyte. The solid electrolyte may be selected suitably from the solid electrolytes that may be contained in the solid electrolyte layer described hereinafter.

Although the positive electrode layer is not particularly limited in thickness, it may have a thickness, for example, of 0.1-1,000 µm.

In addition, the positive electrode layer is not particularly limited in basic weight, but it may have a basic weight, for example, of 3 mg/cm² or more, 4 mg/cm² or more, or 5 mg/cm² or more.

For example, the positive electrode layer may be formed easily by pressing the positive electrode mixture.

The negative electrode layer is one containing at least a negative electrode active material.

The negative electrode active material may include a Li element. Such a negative electrode active material may include lithium single substance or lithium alloy. The lithium alloy may be exemplified by Li-In alloy.

If necessary, the negative electrode layer may include at least one of a solid electrolyte, a conductivity aid and a binder. The solid electrolyte may be selected suitably from the solid electrolytes that may be contained in the solid electrolyte layer described hereinafter. The conductivity aid and binder may be selected suitably from the conductivity aids and binders that may be contained in the above-described positive electrode mixture.

Although the negative electrode layer is not particularly limited in thickness, it may have a thickness, for example, of 0.1-1,000 µm.

For example, the negative electrode layer may be formed easily by pressing the negative electrode active material, or the like. In a variant, foil including the above-mentioned material may be used as a negative electrode layer.

The solid electrolyte layer is one containing at least a solid electrolyte, and may optionally contain a binder.

Particular examples of the solid electrolyte may include a sulfide-based solid electrolyte, an oxide-based solid electrolyte, a nitride-based solid electrolyte, a halide-based solid electrolyte, etc., and among them, a sulfide-based solid electrolyte is preferred.

The sulfide-based solid electrolyte preferably has a Li element, A element (wherein A is at least one selected from P, Ge, Si, Sn, B and Al) and S element. The sulfide-based solid electrolyte may further include a halogen element. Particular examples of the halogen element may include F, Cl, Br and I elements. In addition, the sulfide-based solid electrolyte may further include an O element.

Particular examples of the sulfide-based solid electrolyte may include Li₂S-P₂S₅, Li₂S- P₂S₅- LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ (wherein each of m and n is a positive number, and Z is any one of Ge, Zn and Ga), Li₂S-GeS₂, Li₂S-SiS₂-Li₃PO₄, Li₂S-SiS₂-LiₓMO_{y} (wherein each of x and y is a positive number, and M is any one of P, Si, Ge, B, Al, Ga and In), etc. Preferably, the sulfide-based solid electrolyte may include Li₆PS₅Cl, which is a sulfide-based solid electrolyte having an argyrodite structure, or the like.

One type of solid electrolyte, or two or more types of solid electrolytes may be used. In addition, when using two or more types of solid electrolytes, they may be mixed, or each of them may be formed into a layer and the layers may be formed into a multilayer structure.

The ratio of the solid electrolyte contained in the solid electrolyte layer is not particularly limited, but it may be 50 vol% or more, 70 vol% or more, or 90 vol% or more. The binder used in the solid electrolyte layer may be selected from the binders that may be contained in the positive electrode mixture.

Although the solid electrolyte layer is not particularly limited in thickness, it may have a thickness, for example, of 0.1-1,000 µm. For example, the solid electrolyte layer maybe formed easily by pressing the above-mentioned solid electrolyte, or the like.

The positive electrode current collector may include, for example, SUS, aluminum, nickel, iron, titanium, carbon, or the like.

Meanwhile, the negative electrode current collector may include, for example, SUS, copper, nickel, carbon, or the like.

For example, each of the positive electrode current collector and negative electrode current collector may have a foil-like shape or mesh-like shape.

If necessary, the all-solid-state battery may be provided with a casing configured to receive the positive electrode, the negative electrode and the solid electrolyte layer.

Although the casing is not particularly limited in shape, it may have a laminate shape.

The material of the casing is not particularly limited as long as it is stable against an electrolyte, but particular examples thereof may include resins, such as polypropylene, polyethylene and acrylic resins.

Herein, the all-solid-state battery may be a sulfur battery. The term 'sulfur battery' means a battery using a sulfur-containing positive electrode active material. The all-solid-state battery according to an embodiment of the present disclosure may be a lithium-sulfur battery (LiS battery). The all-solid-state battery may be a primary battery or secondary battery, but a secondary battery is preferred. This is because a secondary battery is rechargeable and is useful, for example, as a battery for mounting in vehicles. Meanwhile, the term 'secondary battery' also covers its application as a primary battery (use for only one-time discharge, after charge).

For example, the all-solid-state battery may have a coin-like, laminate, cylindrical or prismatic shape.

The method for manufacturing the all-solid-state battery according to an embodiment of the present disclosure is not particularly limited, and any method known according to the related art may be used.

### (Example 1)

### (Preparation of positive electrode mixture)

Prepared were single substance sulfur S (positive electrode active material, available from Japan Pure Chemical), CoS (a first sulfur-containing compound containing cobalt), P₂S₅ (a second sulfur-containing compound containing phosphorus) and vapor grown carbon fibers (VGCFs, conductivity aid). They were weighed so that the weight ratio of S/CoS/P₂S₅/VGCF was 45/3/32/20, and each material was kneaded by using an agate mortar for 15 minutes to obtain starting materials. The resultant starting materials were introduced to a container of planetary ball mill (45 cc, made of ZrO₂), ZrO₂ balls (φ = 5 mm, 70 g) were further introduced thereto, and the container was completely sealed. The container was mounted to a planetary ball milling machine (P7 available from Fritsch), and a cycle of 1-hour mechanical milling (holder rotation number 500 rpm), 15-minute pause and 1-hour reverse-rotation mechanical milling (holder rotation number 500 rpm) was repeated to carry out total 20-hour mechanical milling. In this manner, a positive electrode mixture was obtained.

### (Manufacture of all-solid-state battery)

First, 80 mg of Li₆PS₅Cl, a sulfide-based sold electrolyte having an argyrodite structure, was introduced to a 1 cm² mold made of ceramics, and pressed therein under 100 MPa to obtain a solid electrolyte layer. Next, 5 mg (basic weight: 5 mg/cm²) of the positive electrode mixture was disposed on one side of the solid electrolyte layer, and pressing was carried out under 550 Mpa to form a positive electrode layer. Then, lithium metal foil as a negative electrode layer was disposed on the opposite side, and pressing was carried out under 20 MPa to obtain a power generating element. After that, SUS foil (positive electrode current collector) was disposed at the side of the positive electrode layer, and SUS foil (negative electrode current collector) was disposed at the side of the negative electrode layer. In this manner, an all-solid-state battery was obtained.

### (Example 2)

A positive electrode mixture and an all-solid-state battery were obtained in the same manner as Example 1, except that the weight ratio of S/CoS/P₂S₅/VGCF was changed to 45/5/30/20.

### (Example 3)

A positive electrode mixture and an all-solid-state battery were obtained in the same manner as Example 1, except that the weight ratio of S/CoS/P₂S₅/VGCF was changed to 45/10/25/20.

### (Example 4)

A positive electrode mixture and an all-solid-state battery were obtained in the same manner as Example 1, except that the weight ratio of S/CoS/P₂S₅/VGCF was changed to 45/20/15/20.

### Comparative Example 1

A positive electrode mixture and an all-solid-state battery were obtained in the same manner as Example 1, except that CoS was not used, and the weight ratio of S/P₂S₅/VGCF was set at 45/35/20.

**[Table 1]**

| | Amount (g) | | | | Discharge capacity @ 1.5 V (mAh) |
|---|---|---|---|---|---|
| | S | CoS | P₂S₅ | VGCF | |
| Ex. 1 | 0.9 | 0.06 | 0.64 | 0.4 | 290 |
| Ex. 2 | 0.9 | 0.1 | 0.6 | 0.4 | 337 |
| Ex. 3 | 0.9 | 0.2 | 0.5 | 0.4 | 300 |
| Ex. 4 | 0.9 | 0.4 | 0.3 | 0.4 | 251 |
| Comp. Ex. 1 | 0.9 | 0 | 0.7 | 0.4 | 207 |

As shown in FIG. 1, while Example 1 provides a discharge capacity of 290 mAh, Example 2 provides a discharge capacity of 337 mAh/g, Example 3 provides a discharge capacity of 300 mAh and Example 4 provides a discharge capacity of 251 mAh, Comparative Example 1 provides a discharge capacity of 207 mAh.

### (Charge/discharge test)

The all-solid-state batteries obtained according to Examples 1 to 4 and Comparative Example 1 were subjected to a charge/discharge test. The charge/discharge test was carried out in the following order. Meanwhile, the test was carried out at a temperature of 25°C, and 1 C corresponds to 3.09 mA/cm².
(1) Discharge at 0.1 C to 1.5 V, pause for 10 minutes
(2) 1 cycle = [charge at 0.1 C to 3.1 V, pause for 10 minutes, discharge at 0.1 C to 1.5 V and pause for 10 minutes], repeat total 2 cycles
(3) Charge at 0.1 C to 3.1 V, pause for 10 minutes, discharge at 0.2 C to 1.5 V, pause for 10 minutes
(4) Charge at 0.1 C to 3.1 V, pause for 10 minutes, discharge at 0.5 C to 1.5 V, pause for 10 minutes
(5) Charge at 0.1 C to 3.1 V, pause for 10 minutes, discharge at 1 C to 1.5 V

FIG. 1 is a graph illustrating a relationship between a weight ratio (CoS/(S+CoS+P₂S₅+VGCF)) of the first sulfur-containing compound containing cobalt based on a positive electrode mixture and a discharge capacity obtained from the discharge step of (5).

As shown in FIG. 1, each of Examples 1 to 4 containing CoS at the weight ratio shown in Table 1 provides a higher discharge capacity at a cutoff voltage 1.5 V, as compared to Comparative Example 1 containing no CoS. It is thought that this is because the positive electrode mixture according to each of Examples contains CoS, and thus the electron conductivity and the close adhesive property among the constitutional elements themselves in the positive electrode mixture are improved.

In addition, as shown in FIG. 1, each of Examples 1 to 4 containing CoS and P₂S₅ at the weight ratio shown in Table 1 provides a higher discharge capacity at a cutoff voltage 1.5V, as compared to Comparative Example 1 containing only P₂S₅. It is thought that this is because the positive electrode mixture according to each of Examples contains a specific amount of CoS in addition to P₂S₅, and thus the balance between the ion conductivity and electron conductivity of the positive electrode mixture is improved.

Therefore, it is apparent that the positive electrode mixture including the first sulfur-containing compound containing cobalt improves electron conductivity and close adhesive property among the constitutional elements themselves in the positive electrode mixture, and thus the all-solid-state battery using the positive electrode mixture can improve discharge capacity at a cutoff voltage of 1.5 V.

It is also apparent that the positive electrode mixture including the first sulfur-containing compound containing cobalt and the second sulfur-containing compound containing phosphorus improves a balance between the ion conductivity and the electron conductivity of the positive electrode mixture, and thus the all-solid-state battery using the positive electrode mixture can improve discharge capacity at a cutoff voltage of 1.5 V.

## Claims

1. A positive electrode mixture for an all-solid-state battery, comprising:
a sulfur-containing positive electrode active material,
a first sulfur-containing compound containing cobalt,
a second sulfur-containing compound containing phosphorus, and
a conductivity aid.

2. The positive electrode mixture for an all-solid-state battery according to claim 1, wherein the weight ratio of the first sulfur-containing compound based on the combined weight of the positive electrode active material, the first sulfur-containing compound, the second sulfur-containing compound and the conductivity aid is more than 0 and equal to or less than 0.25.

3. The positive electrode mixture for an all-solid-state battery according to claim 1, wherein the molar ratio (Co/P) of cobalt contained in the first sulfur-containing compound based on phosphorus contained in the second sulfur-containing compound is more than 0 and equal to or less than 3.

4. The positive electrode mixture for an all-solid-state battery according to claim 1, wherein the positive electrode active material comprises at least one selected from the group consisting of single substance sulfur and Li₂S.

5. The positive electrode mixture for an all-solid-state battery according to claim 3, wherein the first sulfur-containing compound comprises at least one selected from the group consisting of CoS, CoS₂, Co₃S₄ and Co₉S₈.

6. The positive electrode mixture for an all-solid-state battery according to claim 3, wherein the second sulfur-containing compound comprises at least one selected from the group consisting of P₂S₅, P₂S₄, P₄S₇, P₄S₅ and P₄S₃.

7. The positive electrode mixture for an all-solid-state battery according to claim 1, which comprises no Li element.
